# EUROPEAN PATENT APPLICATION

(11) **EP 2 003 587 A2**
(43) Date of publication of application: **17.12.2008**
(21) Application number: 08251668.3
(22) Date of filing: 12.05.2008
(51) Int. Cl.: G06F 21/00

(54) **Content download**

(30) Priority: 16.05.2007 JP 2007130390
(71) Applicant: Sony Corporation, Tokyo (JP)
(72) Inventor: Kitazato, Naohisa c/o Sony Corporation, Tokyo (JP)
(74) Representative: Merryweather, Colin Henry

(57) **Abstract**

A content download system includes a content providing apparatus providing content and a content receiving apparatus receiving the content from the content providing apparatus via a network. The content receiving apparatus includes an operation input unit, a downloader obtaining download control data and downloading encrypted content and play control data, an obtaining unit obtaining a license including a key for decrypting the encrypted content, checking the license based on the play control data, and re-obtaining the license according to a checking result, and a player decrypting and playing the encrypted content using the license. The content providing apparatus includes a control-data providing unit providing the download control data and the play control data to the content receiving apparatus, a content providing unit providing encrypted content, and a license providing unit providing the license based on the download control data and the license based on the play control data.

## Description

The present invention contains subject matter related to Japanese Patent Application JP 2007-130390 filed in the Japanese Patent Office on May 16, 2007, the entire contents of which are incorporated herein by reference.

The present invention relates to content download systems and methods, content providing apparatuses and methods, content receiving apparatuses and methods, and programs therefor. More particularly, the present invention relates to a content download system and method, a content providing apparatus and method, a content receiving apparatus and method, and a program therefor that are suitable for use in realizing a content download service enabling a user to use downloaded and stored content at an arbitrary time.

As high-speed data communication networks, such as the Internet by way of a typical example, have become widely used, content download services for providing various types of content products, such as music, video, and computer programs, have been available (for example, see Japanese Unexamined Patent Application Publication No. 2000-113066).

However, these existing content download services are dedicated to personal computers. Unlike television receivers, for example, these services dedicated to personal computers are not easily used by everyone.

In particular, full-scale content download services that provide video products (including corresponding audio and subtitles) have not been started yet. Most of these services are only experimental. One of these services is an "all-you-can-download" service provided for a fixed, prepaid fee, which enables a user to download content at an arbitrary timing. Another service is a prepaid service in which, every time video content is downloaded, a corresponding amount is subtracted from the prepaid amount. In these manners, only basic patterns of operation have been merely realized.

When content download services that provide video content products are provided in full scale, besides the foregoing basic patterns of operation, various other patterns of operation are conceivable.

A pattern of operation refers to a combination of the structure of a package, which is a unit of a video content product, a charging timing, and a download timing.

It is desirable to provide a system that can handle various patterns of operation of content download services.

A content download system according to a first embodiment of the present invention is a content download system including a content providing apparatus configured to provide content and a content receiving apparatus configured to receive the content provided from the content providing apparatus via a network. The content receiving apparatus includes the following elements: operation input means for receiving an input of an operation entered by a user; download means for obtaining, in response to the operation entered by the user, download control data necessary for downloading content from the content providing apparatus and, on the basis of the download control data, downloading encrypted content and play control data necessary for playing the encrypted content from the content providing apparatus; obtaining means for obtaining, in a case where the encrypted content is downloaded, on the basis of the download control data, a license including a key for decrypting the encrypted content from the content providing apparatus and, in order to play the downloaded and encrypted content, checking the obtained license on the basis of the play control data and re-obtaining the license according to a checking result; and play means for decrypting the encrypted content using the obtained license and playing the decrypted content. The content providing apparatus includes the following elements: control-data providing means for providing the download control data, which is necessary for the content receiving apparatus to download content, and the play control data, which is necessary for the content receiving apparatus to play the downloaded content, to the content receiving apparatus; content providing means for providing, to the content receiving apparatus, the encrypted content in response to a request from the content receiving apparatus on the basis of the download control data; and license providing means for providing, to the content receiving apparatus, the license including the key for decrypting the encrypted content in response to a request from the content receiving apparatus on the basis of the download control data and for providing, to the content receiving apparatus, the license in response to a request from the content receiving apparatus on the basis of the play control data.

A content download method according to the first embodiment of the present invention is a content download method for a content download system including a content providing apparatus configured to provide content and a content receiving apparatus configured to receive the content provided from the content providing apparatus via a network. The method includes the steps of receiving, using the content receiving apparatus, an input of an operation entered by a user; obtaining, using the content receiving apparatus, in response to the operation entered by the user, download control data necessary for downloading content from the content providing apparatus; requesting, using the content receiving apparatus, on the basis of the download control data, encrypted content and play control data necessary for playing the encrypted content from the content providing apparatus; providing, using the content providing apparatus, the encrypted content and the play control data in response to the request from the content receiving apparatus on the basis of the download control data; requesting, using the content receiving apparatus, in a case where the encrypted content is downloaded, a license including a key for decrypting the encrypted content from the content providing apparatus on the basis of the download control data; providing, using the content providing apparatus, the license to the content receiving apparatus in response to the request from the content receiving apparatus on the basis of the download control data; checking, using the content receiving apparatus, in order to play the downloaded and encrypted content, the obtained license on the basis of the play control data and re-requesting the license according to a checking result; and providing, using the content providing apparatus, the license to the content receiving apparatus in response to the request from the content receiving apparatus on the basis of the play control data.

According to the first embodiment of the present invention, the content receiving apparatus obtains, in response to an operation entered by a user, download control data necessary for downloading content from the content providing apparatus and, on the basis of the download control data, requests encrypted content and play control data necessary for playing the encrypted content from the content providing apparatus. In response to this request, the content providing apparatus provides the encrypted content and the play control data to the content receiving apparatus. In a case where the content receiving apparatus downloads the encrypted content, on the basis of the download control data, the content receiving apparatus requests a license including a key for decrypting the encrypted content from the content providing apparatus. In response to this request, the content providing apparatus provides the license to the content receiving apparatus. In order to play the downloaded and encrypted content, the content receiving apparatus checks the obtained license on the basis of the play control data and re-requests the license according to a checking result. In response to this request, the content providing apparatus provides the license to the content receiving apparatus.

A content providing apparatus according to a second embodiment of the present invention is a content providing apparatus configured to provide content to a content receiving apparatus connected to the content providing apparatus via a network. The content providing apparatus includes the following elements: control-data providing means for providing, to the content receiving apparatus, download control data necessary for the content receiving apparatus to download content and play control data necessary for the content receiving apparatus to play the downloaded content; content providing means for providing, to the content receiving apparatus, encrypted content in response to a request from the content receiving apparatus on the basis of the download control data; and license providing means for providing, to the content receiving apparatus, a license including a key for decrypting the encrypted content in response to a request from the content receiving apparatus on the basis of the download control data and for providing, to the content receiving apparatus, the license in response to a request from the content receiving apparatus on the basis of the play control data.

The content providing apparatus according to the second embodiment of the present invention may further include charging means for charging, in response to the request for the license made by the content receiving apparatus on the basis of the download control data, a fee to a user of the content receiving apparatus or for reducing the number of purchased rights.

The content providing apparatus according to the second embodiment of the present invention may further include customer management means for recognizing, in response to the request for the license made by the content receiving apparatus on the basis of the download control data, that the content corresponding to the license has been downloaded by the content receiving apparatus and storing the downloaded content in correspondence with a user of the content receiving apparatus.

The license providing means may provide a dummy license in response to the request from the content receiving apparatus on the basis of the download control data and an authenticate license in response to the request from the content receiving apparatus on the basis of the play control data.

A content providing method according to the second embodiment of the present invention is a content providing method for a content providing apparatus configured to provide content to a content receiving apparatus connected to the content providing apparatus via a network. The method includes the steps of providing download control data necessary for the content receiving apparatus to download content to the content receiving apparatus; providing, in response to a request from the content receiving apparatus on the basis of the download control data, play control data necessary for the content receiving apparatus to play the downloaded content to the content receiving apparatus; providing, to the content receiving apparatus, encrypted content in response to a request from the content receiving apparatus on the basis of the download control data; providing, to the content receiving apparatus, a license including a key for decrypting the encrypted content in response to a request from the content receiving apparatus on the basis of the download control data; and providing, to the content receiving apparatus, the license in response to a request from the content receiving apparatus on the basis of the play control data.

A program according to the second embodiment of the present invention is a program for controlling a content providing apparatus configured to provide content to a content receiving apparatus connected to the content providing apparatus via a network. The program causes a computer to perform a process including the steps of providing download control data necessary for the content receiving apparatus to download content to the content receiving apparatus; providing, in response to a request from the content receiving apparatus on the basis of the download control data, play control data necessary for the content receiving apparatus to play the downloaded content to the content receiving apparatus; providing, to the content receiving apparatus, encrypted content in response to a request from the content receiving apparatus on the basis of the download control data; providing, to the content receiving apparatus, a license including a key for decrypting the encrypted content in response to a request from the content receiving apparatus on the basis of the download control data; and providing, to the content receiving apparatus, the license in response to a request from the content receiving apparatus on the basis of the play control data.

According to the second embodiment of the present invention, download control data necessary for downloading content is provided to the content receiving apparatus. In response to a request from the content receiving apparatus on the basis of the download control data, play control data necessary for playing the downloaded content is provided to the content receiving apparatus. In response to a request from the content receiving apparatus on the basis of the download control data, encrypted content is provided to the content receiving apparatus. Furthermore, in response to a request from the content receiving apparatus on the basis of the download control data, a license including a key for decrypting the encrypted content is provided to the content receiving apparatus. In response to a request from the content receiving apparatus on the basis of the play control data, the license is provided to the content receiving apparatus.

A content receiving apparatus according to a third embodiment of the present invention is a content receiving apparatus configured to receive content provided from a content providing apparatus connected to the content receiving apparatus via a network. The content receiving apparatus includes the following elements: operation input means for receiving an input of an operation entered by a user; download means for obtaining, in response to the operation entered by the user, download control data necessary for downloading content from the content providing apparatus and, on the basis of the download control data, downloading encrypted content and play control data necessary for playing the encrypted content from the content providing apparatus; obtaining means for obtaining, in a case where the encrypted content is downloaded, on the basis of the download control data, a license including a key for decrypting the encrypted content from the content providing apparatus and, in order to play the downloaded and encrypted content, checking the obtained license on the basis of the play control data and re-obtaining the license according to a checking result; and play means for decrypting the encrypted content using the obtained license and playing the decrypted content.

In a case where the encrypted content is downloaded, on the basis of the download control data, the obtaining means may obtain a dummy license from the content providing apparatus and, in order to play the downloaded and encrypted content, the obtaining means may obtain an authenticate license on the basis of the play control data.

The obtaining means may obtain the license on the basis of the play control data only in a case where the obtaining of the license is acknowledged by the user.

In a case where the encrypted content is downloaded, on the basis of the download control data, the obtaining means may obtain an authenticate license from the content providing apparatus and, in order to play the downloaded and encrypted content, the obtaining means may check the obtained authenticate license on the basis of the play control data.

In a case where the encrypted content is downloaded, the obtaining means may obtain the license from the content providing apparatus only when information for obtaining the license is included in the download control data.

A content receiving method according to the third embodiment of the present invention is a content receiving method for a content receiving apparatus configured to receive content provided from a content providing apparatus connected to the content receiving apparatus via a network. The method includes the steps of receiving an input of an operation entered by a user; obtaining, in response to the operation entered by the user, download control data necessary for downloading content from the content providing apparatus; downloading, on the basis of the download control data, encrypted content and play control data necessary for playing the encrypted content from the content providing apparatus; obtaining, in a case where the encrypted content is downloaded, on the basis of the download control data, a license including a key for decrypting the encrypted content from the content providing apparatus; checking, in order to play the downloaded and encrypted content, the obtained license on the basis of the play control data and re-obtaining the license according to a checking result; and decrypting the encrypted content using the obtained license and playing the decrypted content.

A program according to the third embodiment of the present invention is a program for controlling a content receiving apparatus configured to receive content provided from a content providing apparatus connected to the content receiving apparatus via a network. The program causes a computer to perform a process including the steps of receiving an input of an operation entered by a user; obtaining, in response to the operation entered by the user, download control data necessary for downloading content from the content providing apparatus; downloading, on the basis of the download control data, encrypted content and play control data necessary for playing the encrypted content from the content providing apparatus; obtaining, in a case where the encrypted content is downloaded, on the basis of the download control data, a license including a key for decrypting the encrypted content from the content providing apparatus; checking, in order to play the downloaded and encrypted content, the obtained license on the basis of the play control data and re-obtaining the license according to a checking result; and decrypting the encrypted content using the obtained license and playing the decrypted content.

According to the third embodiment of the present invention, in response to an operation entered by a user, download control data necessary for downloading content is obtained from the content providing apparatus. On the basis of the download control data, encrypted content and play control data necessary for playing the encrypted content are downloaded from the content providing apparatus. In a case where the encrypted content is downloaded, on the basis of the download control data, a license including a key for decrypting the encrypted content is obtained from the content providing apparatus. Furthermore, in order to play the downloaded and encrypted content, the obtained license is checked on the basis of the play control data. The license is re-obtained according to a checking result. The encrypted content is decrypted using the obtained license, and the decrypted content is played.

According to the first embodiment of the present invention, a system that can handle various patterns of operation of content download services can be provided.

According to the second embodiment of the present invention, content can be provided to the receiving apparatus in accordance with various patterns of operation of content download services.

According to the third embodiment of the present invention, content can be downloaded and used in accordance with various patterns of operation of content download services.

Non-limitative embodiments of the present invention will now be described with reference to the drawings, in which:
Fig. 1 is a conceptual diagram of a content download system according to an embodiment of the present invention;
Fig. 2 is a chart illustrating a content download timing and a content play timing;
Fig. 3 is a block diagram illustrating an exemplary configuration of a content download system;
Fig. 4 is a diagram illustrating a process of encrypting and decrypting content;
Fig. 5 is an illustration of an exemplary description of a download control metafile;
Fig. 6 is an illustration of an exemplary description of a play control metafile;
Fig. 7 is a diagram illustrating the outline of a downloading process;
Fig. 8 is a timing chart illustrating a downloading process;
Fig. 9 is a flowchart illustrating a downloading process performed by a downloader;
Fig. 10 is a diagram illustrating the outline of a local-content playing process;
Fig. 11 is a timing chart illustrating a local-content playing process;
Fig. 12 is a flowchart illustrating a local-content playing process;
Fig. 13 is a sequence chart illustrating a process corresponding to pattern a of operation;
Fig. 14 is a sequence chart illustrating a process corresponding to pattern b of operation;
Fig. 15 is a sequence chart illustrating a process corresponding to pattern c of operation;
Fig. 16 is a sequence chart illustrating a process corresponding to pattern d of operation;
Fig. 17 is a sequence chart illustrating a process corresponding to pattern e of operation;
Fig. 18 is a sequence chart illustrating a process corresponding to pattern f of operation;
Fig. 19 is a sequence chart illustrating a process corresponding to pattern g of operation;
Fig. 20 is a sequence chart illustrating a process corresponding to pattern h of operation;
Fig. 21 is a sequence chart illustrating a process corresponding to pattern i of operation;
Fig. 22 is a sequence chart illustrating a process corresponding to pattern j of operation; and
Fig. 23 is a block diagram illustrating an exemplary structure of a general-purpose computer.

Before describing an embodiment of the present invention, the correspondence between the features of the claims and the specific elements disclosed in an embodiment of the present invention described with reference to the specification or the drawings is discussed below. This description is intended to assure that an embodiment supporting the claimed invention is described in this specification or the drawings. Thus, even if an element in the following embodiment is not described as relating to a certain feature of the present invention in the specification or the drawings, that does not necessarily mean that the element does not relate to that feature of the claims. Conversely, even if an element is described herein as relating to a certain feature of the claims, that does not necessarily mean that the element does not relate to other features of the claims.

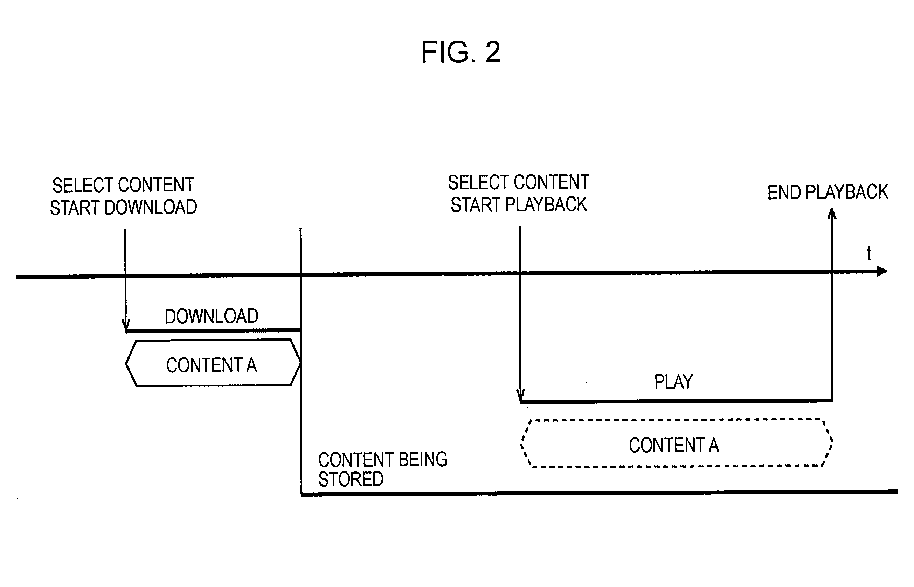

A content download system according to a first embodiment of the present invention is a content download system (e.g., a content download system 1 shown in Fig. 2) including a content providing apparatus (e.g., a providing apparatus 20 shown in Fig. 2) configured to provide content, and a content receiving apparatus (e.g., a receiving apparatus 10 shown in Fig. 2) configured to receive the content provided from the content providing apparatus via a network. The content receiving apparatus includes the following elements: operation input means (e.g., a browser 11 shown in Fig. 2) for receiving an input of an operation entered by a user; download means (e.g., a downloader 12 shown in Fig. 2) for obtaining, in response to the operation entered by the user, download control data necessary for downloading content from the content providing apparatus and, on the basis of the download control data, downloading encrypted content and play control data necessary for playing the encrypted content from the content providing apparatus; obtaining means (e.g., a digital rights management (DRM) client 16 shown in Fig. 2) for obtaining, in a case where the encrypted content is downloaded, on the basis of the download control data, a license including a key for decrypting the encrypted content from the content providing apparatus and, in order to play the downloaded and encrypted content, checking the obtained license on the basis of the play control data and re-obtaining the license according to a checking result; and play means (e.g., an audio/visual (AV) player 15 shown in Fig. 2) for decrypting the encrypted content using the obtained license and playing the decrypted content. The content providing apparatus includes the following elements: control-data providing means (e.g., a metadata server 24 shown in Fig. 2) for providing the download control data, which is necessary for the content receiving apparatus to download content, and the play control data, which is necessary for the content receiving apparatus to play the downloaded content, to the content receiving apparatus; content providing means (e.g., a content server 25 shown in Fig. 2) for providing, to the content receiving apparatus, the encrypted content in response to a request from the content receiving apparatus on the basis of the download control data; and license providing means (e.g., a DRM server 26 shown in Fig. 2) for providing, to the content receiving apparatus, the license including the key for decrypting the encrypted content in response to a request from the content receiving apparatus on the basis of the download control data and for providing, to the content receiving apparatus, the license in response to a request from the content receiving apparatus on the basis of the play control data.

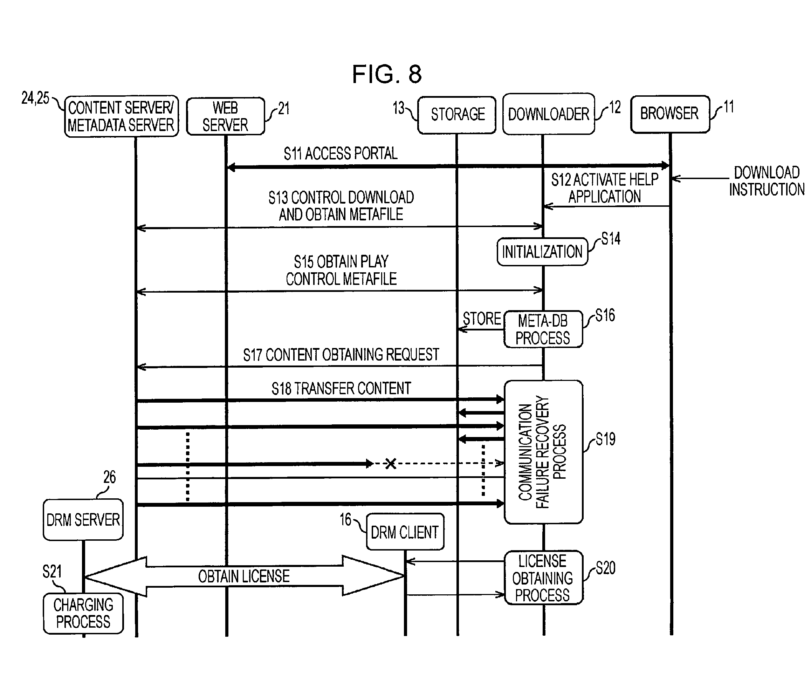

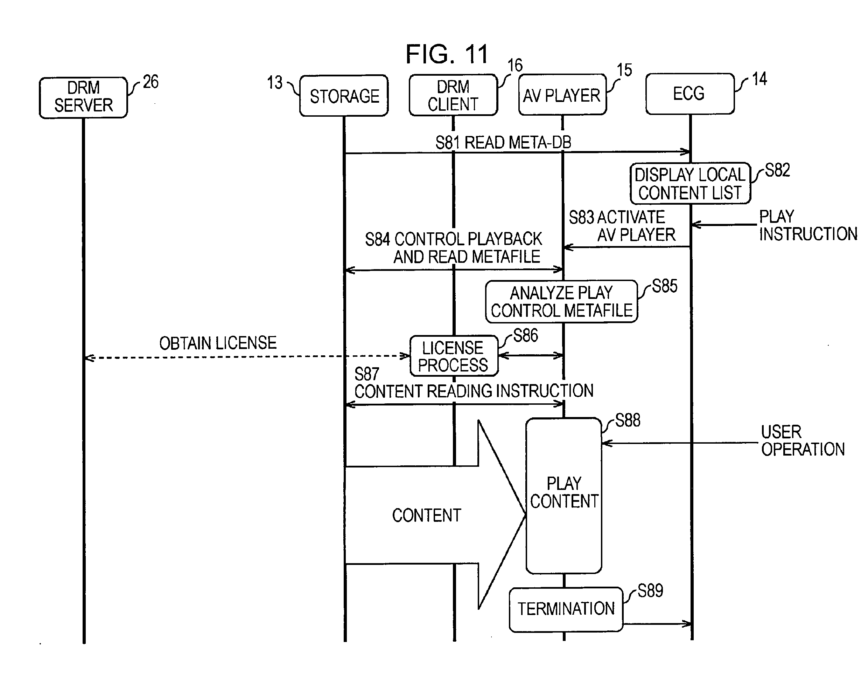

A content download method according to the first embodiment of the present invention is a content download method for a content download system including a content providing apparatus configured to provide content and a content receiving apparatus configured to receive the content provided from the content providing apparatus via a network. The method includes the steps of receiving, using the content receiving apparatus, an input of an operation entered by a user (e.g., step S11 of Fig. 8); obtaining, using the content receiving apparatus, in response to the operation entered by the user, download control data necessary for downloading content from the content providing apparatus (e.g., step S13 of Fig. 8); requesting, using the content receiving apparatus, on the basis of the download control data, encrypted content and play control data necessary for playing the encrypted content from the content providing apparatus (e.g., steps S15 and S17 of Fig. 8); providing, using the content providing apparatus, the encrypted content and the play control data in response to the request from the content receiving apparatus on the basis of the download control data (e.g., step S18 of Fig. 8); requesting, using the content receiving apparatus, in a case where the encrypted content is downloaded, a license including a key for decrypting the encrypted content from the content providing apparatus on the basis of the download control data and providing, using the content providing apparatus, the license to the content receiving apparatus in response to the request from the content receiving apparatus on the basis of the download control data (e.g., step S20 of Fig. 8); checking, using the content receiving apparatus, in order to play the downloaded and encrypted content, the obtained license on the basis of the play control data (e.g., step S85 of Fig. 11) and re-requesting the license according to a checking result; and providing, using the content providing apparatus, the license to the content receiving apparatus in response to the request from the content receiving apparatus on the basis of the play control data (e.g., step S88 of Fig. 11).

Regarding second and third embodiments of the present invention, the correspondence between the features of the claims and the specific elements disclosed in an embodiment of the present invention described with reference to the specification or the drawings is similar to that in the foregoing embodiments, and descriptions thereof are thus omitted.

A specific embodiment of the present invention will be described in detail below with reference to the drawings.

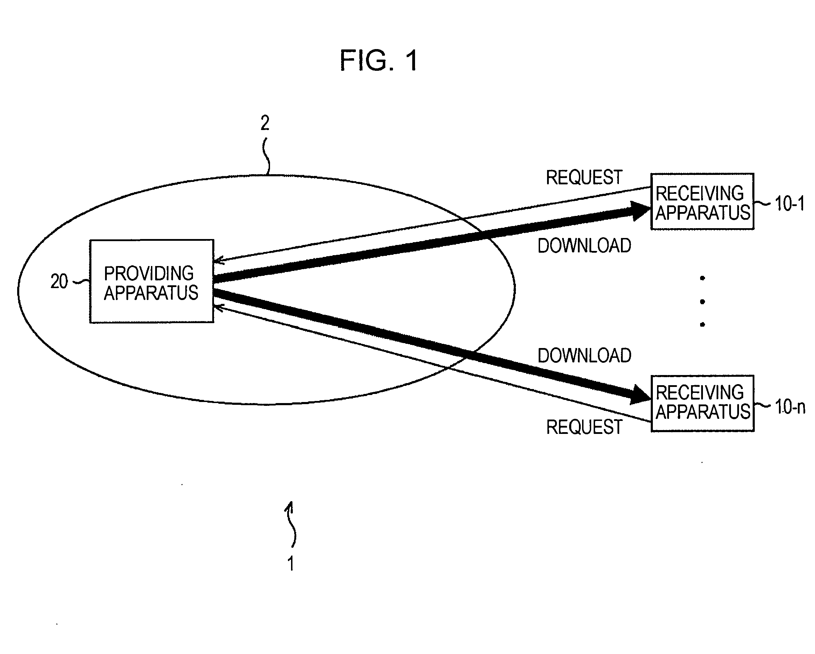

Fig. 1 illustrates the basic concept of a content download system according to an embodiment of the present invention.

A content download system 1 includes a receiving apparatus 10 provided at the home of a user who views content, and a providing apparatus 20 that enables the receiving apparatus 10 to download content upon a request from the receiving apparatus 10 connected to the providing apparatus 20 via a network 2.

In the present embodiment, the term "download" refers to transfer of electronic data, such as content, from the providing apparatus 20 to the receiving apparatus 10 via the network 2 and accumulation of the transferred electronic data in the receiving apparatus 10. The term "content" refers to encrypted data including audio/visual (AV) data for playing video and corresponding audio and subtitle data corresponding to the AV data.

The network 2 is a data communication network represented by the Internet. It is preferable, but not necessary, for the network 2 to have a high communication speed since content is downloaded and used in the content download system 1.

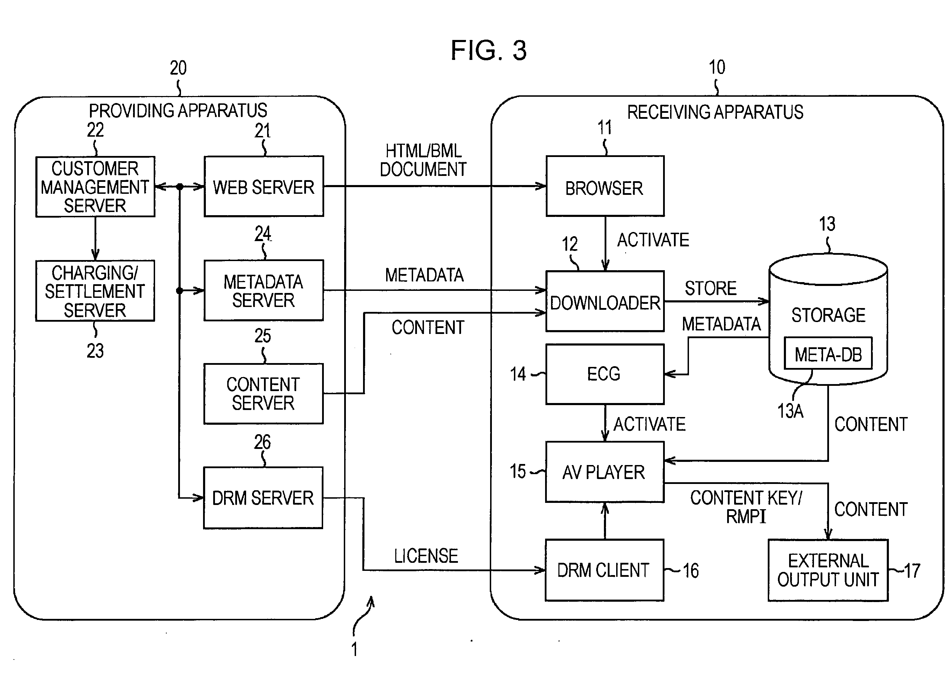

The receiving apparatus 10 is assumed to be contained in or externally attached to, for example, a television receiver. The providing apparatus 20 includes a plurality of servers provided in the network 2 (the details of the receiving apparatus 10 and the providing apparatus 20 will be described later with reference to Fig. 3).

According to the content download system 1, as shown in Fig. 2, a user of the receiving apparatus 10 can download arbitrary content A from the providing apparatus 20 via the network 2 and subsequently play and view the content A stored in the receiving apparatus 10 at an arbitrary time.

Referring now to Fig. 3, a detailed exemplary structure of the receiving apparatus 10 and the providing apparatus 20 included in the content download system 1 will be described.

The receiving apparatus 10 includes a browser 11 that accesses the providing apparatus 20 to obtain a hypertext markup language (HTML) document, a broadcast markup language (BML) document, or the like and displays a web page; a downloader 12 that transfers content and its metadata from the providing apparatus 20 as a help application for the browser 11 and stores the transferred content and metadata in a storage 13; the storage 13 including a hard disk drive or the like; an electronic content guide (ECG) 14 that displays a list of pieces of downloaded content to the user; an AV player 15 that plays the downloaded content; a digital rights management (DRM) client 16 that obtains a license including a content key necessary for decrypting encrypted content from the providing apparatus 20; and an external output unit 17 that outputs the content played by the AV player 15 to outside of the receiving apparatus 10.

On the basis of an HTML document, a BML document, or the like obtained from the providing apparatus 20, the browser 11 displays a web page offering a content download service contract and a web page enabling the user to interactively enter operations to purchase content or to select content to download.

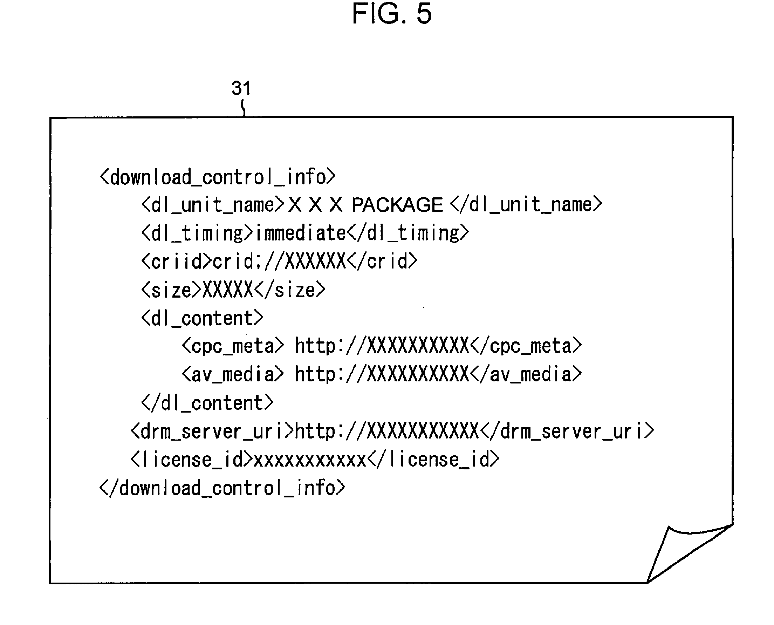

The downloader 12 is activated under control of the browser 11 on the basis of an HTML document, a BML document, or the like. The downloader 12 transfers metadata and encrypted content from the providing apparatus 20 and stores the transferred metadata and content in the storage 13. The metadata includes a download control metafile 31 (Fig. 5) which is information necessary for transferring content, a license corresponding to the content, and a play control metafile 41 (Fig. 5) which is information necessary for playing the content, and the play control metafile 41. Furthermore, the downloader 12 generates a meta-database (DB) 13A, which includes information for presenting to the user a list of pieces of content stored in the storage 13, on the basis of play control metafiles 41 serving as metadata, and stores the meta-DB 13A in the storage 13.

The storage 13 stores content and its metadata transferred from the providing apparatus 20. The storage 13 also stores the meta-DB 13A generated by the downloader 12.

The ECG 14 is a resident application and presents to the user a list of pieces of downloaded content on the basis of the meta-DB 13A stored in the storage 13. Furthermore, the ECG 14 presents to the user a local content list, which is an interactive graphical user interface (GUI) that enables the user to select content to play.

The AV player 15 is activated by the ECG 14. The AV player 15 reads content to play from the storage 13 and decrypts and plays the content, which has been encrypted, using a content key provided from the DRM client 16. As a result of decrypting and playing the content, the AV player 15 obtains AV data. According to the AV data, the AV player 15 displays video on a display (not shown) and outputs audio from a loudspeaker (not shown). The AV player 15 provides the obtained AV data to the external output unit 17 only when it is permitted by Rights Management and Protection Interface Information (RMPI) provided from the DRM client 16.

After establishing a secure communication channel with a DRM server 26 of the providing apparatus 20, the DRM client 16 obtains a license including a content key from the DRM server 26 and stores the obtained license therein. Upon a request from the AV player 15, the DRM client 16 provides the content key to the AV player 15 only when a usage condition written in the license is satisfied.

The external output unit 17 converts the AV data provided from the AV player 15 into a format specified by an output destination (removable medium, a player, a recorder, or the like) and outputs the converted data to the destination.

The providing apparatus 20 includes a web server 21 that provides an HTML document, a BML document, or the like for displaying an interactive web page to the receiving apparatus 10; a customer management server 22 that manages information on customers of the content download service; a charging/settlement server 23 that makes settlement when the content download service is used; a metadata server 24 that transfers metadata corresponding to content to the receiving apparatus 10; a content server 25 that transfers content to the receiving apparatus 10; and the DRM server 26 that provides a license to the DRM client 16 of the receiving apparatus 10.

Upon a request from the browser 11, the web server 21 provides HTML documents, BML documents, or the like for displaying various web pages to the browser 11. The customer management server 22 manages a package (product unit) purchased or content downloaded by each customer (the user of the receiving apparatus 10) in correspondence with customer information (e.g., customer identification (ID), password, settlement information (credit card number or the like), device ID of the receiving apparatus 10, ID of the DRM client 16 (DRM ID), or the like).

In the present specification, the term "purchase" includes the definition of a contract. That is, for example, when a customer makes a package contract to download and use an arbitrary number of pieces of content with a fixed monthly fee, the term "purchase" is used.

The charging/settlement server 23 performs charging and settlement of an account of the customer upon a request from the customer management server 22.

The metadata server 24 manages information on packages (content product units) and content and provides necessary information to other servers. Upon a request from the downloader 12 of the receiving apparatus 10, the metadata server 24 transfers metadata including the download control metafile 31 and the play control metafile 41 to the downloader 12. The content server 25 transfers content to the downloader 12 upon a request from the downloader 12 of the receiving apparatus 10.

After establishing a secure communication channel with the DRM client 16 of the receiving apparatus 10, the DRM server 26 provides a license including a content key for decrypting encrypted content to the DRM client 16.

The web server 21, the customer management server 22, the charging/settlement server 23, the metadata server 24, the content server 25, and the DRM server 26 included in the providing apparatus 20 may be concentrated or dispersed in the network 2. Some of the web server 21, the customer management server 22, the charging/settlement server 23, the metadata server 24, the content server 25, and the DRM server 26 may be combined.

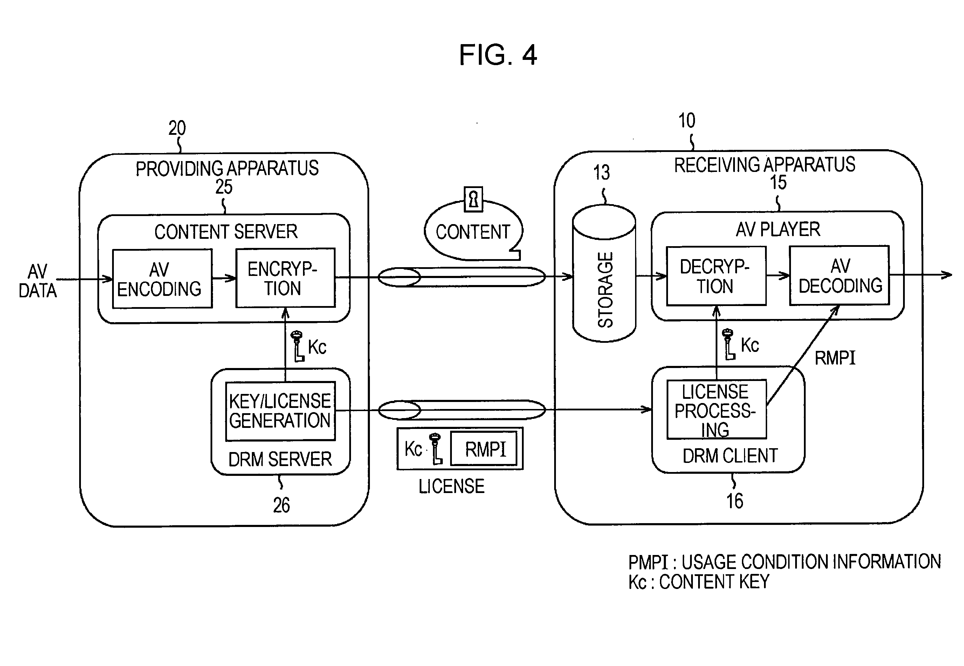

Referring now to Fig. 4, content transferred from the providing apparatus 20 to the receiving apparatus 10 will be described.

AV data constituting content is compressed and encoded in a predetermined encoding format (e.g., Moving Picture Experts Group (MPEG)-2) by the content server 25 of the providing apparatus 20. Thereafter, the compressed and encoded AV data is, together with subtitle data or the like, processed into transport stream (TS) packets. This content, which has been encrypted in units of TS packets using a content key generated by the DRM server 26, is transferred to the receiving apparatus 10 and stored in the storage 13.

In contrast, a content key for decrypting the encrypted content is included in a license and provided separately from content, together with RMPI (including copy control information or the like), from the DRM server 26 of the providing apparatus 20 to the DRM client 16 of the receiving apparatus 10.

The content stored in the storage 13, which has been encrypted in units of TS packets, is decrypted by the AV player 15 using the content key provided from the DRM client 16, and, as a result, MPEG-2 TS packets are obtained. These MPEG-2 TS packets are decoded. Note that the content key is provided from the DRM client 16 only when a usage condition (usage period, usage count, or the like) written in the license is satisfied.

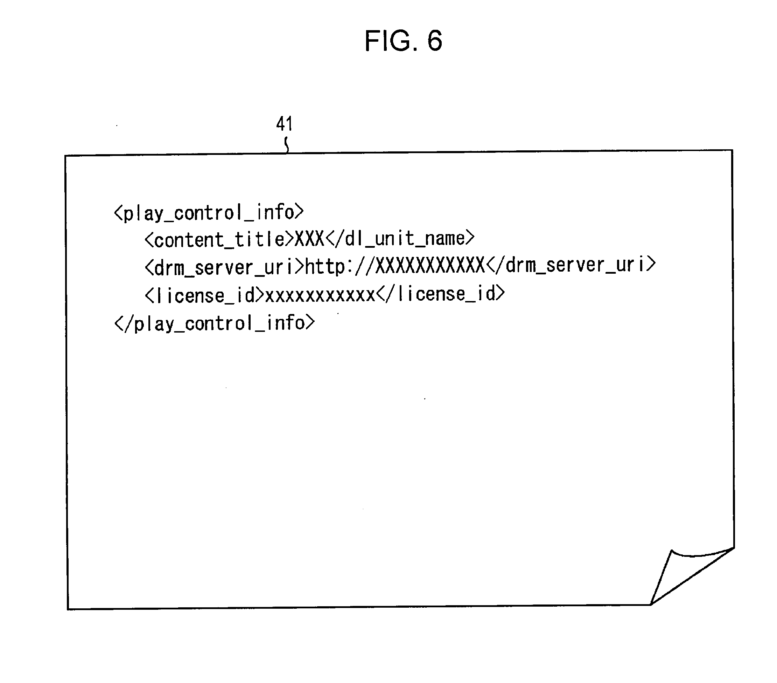

Referring now to Figs. 5 and 6, metadata obtained by the receiving apparatus 10 from the providing apparatus 20 will be described.

Fig. 5 is an illustration of an exemplary description of the download control metafile 31, which is necessary for downloading content, a license corresponding to the content, and the play control metafile 41. The download control metafile 31 does not necessarily correspond to a single piece of content. The download control metafile 31 corresponds to a download unit including one or more pieces of content.

In the download control metafile 31, the name of a content download unit is written in <dl_unit_name>, and a content download timing (immediate, reserved, or periodical) of content included in the download unit is written in <dl_timing>.

When a plurality of pieces of content are included in a single download unit package, the following fields from <criid> to <av_media> are filled out for each piece of content.

The ID of content included in the download unit is written in <criid>. The data size of the content is written in <size>. The uniform resource identifier (URI) of a transfer source of the play control metafile 41, which is necessary for playing the content, is written in <cpc_meta>. The URI of a transfer source of the content is written in <av_media>.

The URL of the DRM server 26, from which a license corresponding to the download unit is obtained, is written in the <drm_server_uri>. The ID of a license corresponding to the download unit is written in <license_id>. The license ID written in <license_id> may not be the ID of an authenticate license (that can decrypt the encrypted content). Instead, the license ID may be the ID of a dummy license (that is incapable of decrypting the encrypted content) (details will be described later).

Additional information indicating whether to obtain a license in response to completion of downloading the content may be written in the download control metafile 31. In this way, a license can be obtained in response to completion of downloading the content only when the foregoing information indicating that the license shall be obtained in response to completion of downloading the content is written.

Fig. 6 is an illustration of an exemplary description of the play control metafile 41, which is necessary for playing content. One play control metafile 41 exists in correspondence with one piece of content.

In the play control metafile 41, the name of content is written in <content_title>. The URI of the DRM server 26, from which a license corresponding to the content is obtained, is written in <drm_server_uri>. The ID of the license corresponding to the content is written in <license_id>. The license ID written in <license_id> is the ID of an authenticate license (that can decrypt the encrypted content) (details will be described later).

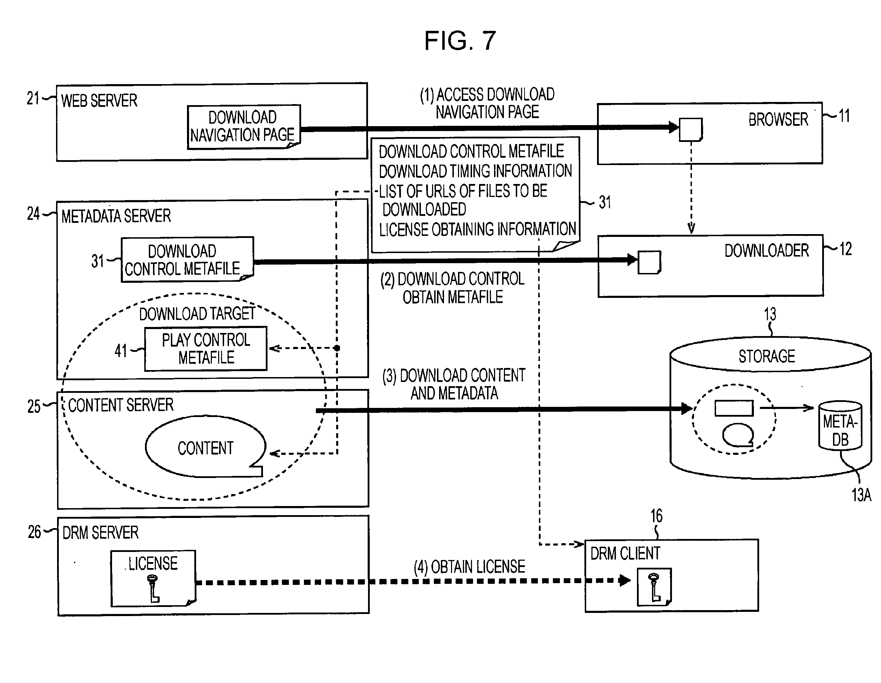

Referring now to Fig. 7, the outline of a process of downloading content from the providing apparatus 20 to the receiving apparatus 10 will be described.

In order to perform a downloading process, it is assumed that the user of the receiving apparatus 10 has registered himself/herself at the content download service provider to use the service. Accordingly, information on the user of the receiving apparatus 10 is registered as customer information in the customer management server 22 of the providing apparatus 20. Furthermore, information on a package purchased by the user and content downloaded by the user is also managed in correspondence with the user in the customer management server 22 of the providing apparatus 20.

In response to a predetermined operation entered by the user, the browser 11 of the receiving apparatus 10 accesses the web server 21 of the providing apparatus 20 and presents to the user a download navigation page including a list of pieces of downloadable content. When the user enters an operation on the download navigation page to select content in units of download units, the downloader 12 is activated.

The activated downloader 12 obtains the download control metafile 31 corresponding to the selected content download unit from the metadata server 24. The URI of the metadata server 24, from which the download control metafile 31 is obtained, is written in an HTML document or the like of the download navigation page.

The downloader 12, which has obtained the download control metafile 31, transfers content from the content server 25 and the play control metafile 41 from the metadata server 24 in accordance with the details written in the download control metafile 31 and stores the transferred content and the play control metafile 41 in the storage 13. Furthermore, the downloader 12 generates the meta-DB 13A for generating a local content list on the basis of the transferred play control metafile 41 and stores the meta-DB 13A in the storage 13.

Furthermore, the downloader 12 requests the DRM client 16 to obtain a license. In accordance with the details written in the download control metafile 31 obtained from the downloader 12, the DRM client 16 requests a license from the DRM server 26 and obtains the license.

The outline of the downloading process has been described as above.

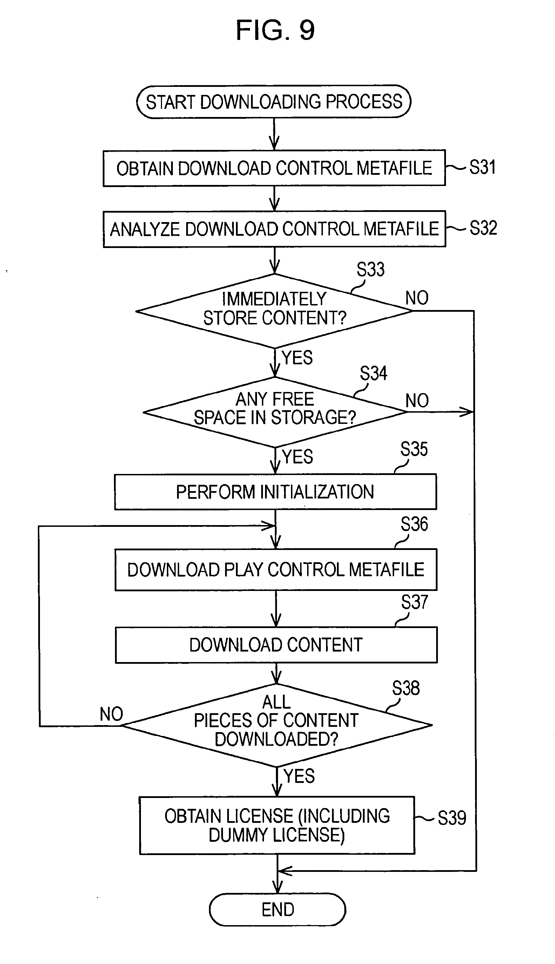

Referring now to the timing chart shown in Fig. 8 and the flowchart shown in Fig. 9, the downloading process will be described in more detail. Referring to Fig. 8, the metadata server 24 and the content server 25 are integrated for convenience. The same may apply to the following drawings. Of the downloading process, Fig. 9 particularly illustrates a process performed by the downloader 12 of the receiving apparatus 10.

In order to perform the downloading process, the assumption is the same as that described in the outline description. First of all, in step S11, the browser 11 of the receiving apparatus 10 accesses the web server 21 of the providing apparatus 20, performs user authentication, and obtains an HTML document or the like for displaying a web page. Furthermore, the browser 11 presents to the user a download navigation page on the basis of the obtained HTML document or the like. When the user enters an operation on the download navigation page, which can be interactively operated, to select content in units of download units, the browser 11 activates the downloader 12, which is a help application, in step S12.

In step S13, the activated downloader 12 obtains the download control metafile 31 corresponding to the selected content download unit from the metadata server 24 on the basis of the URI of the metadata server 24, which is sent from the browser 11, and stores the download control metafile 31 in the storage 13 (which corresponds to step S31 of Fig. 9).

In step S14, the downloader 12 performs initial processing. That is, the downloader 12 analyzes the obtained download control metafile 31 to check a download timing or to detect the data size of content to be downloaded and to check the free space of the storage 13, or generates a directory in the storage 13 (which corresponds to steps S32 to S35 of Fig. 9).

In step S15, the downloader 12 accesses the metadata server 24 on the basis of the URI of the metadata server 24, which is written in the download control metafile 31, and obtains the play control metafile 41 corresponding to each of the pieces of content included in the selected download unit. In step S16, the downloader 12 generates the meta-DB 13A and stores the meta-DB 13A and the play control metafiles 41 in the storage 13 (which corresponds to step S36 of Fig. 9).

In step S17, the downloader 12 accesses the content server 25 on the basis of the URI of the content server 25 and the content ID, which are written in the download control metafile 31, and requests transfer of content included in the selected download unit. In response to this request, in step S18, the content server 25 starts transferring the requested content, and the downloader 12 stores the transferred content in the storage 13 (which corresponds to step S37 of Fig. 9).

During the transfer, even if the transfer is interrupted by a communication failure or the like, in step S19, the downloader 12 performs a process to resume the transfer, starting from a state in which the communication has been interrupted, after the communication failure is overcome.

After downloading of all the pieces of content included in the selected download unit is completed, in step S20, the downloader 12 requests the DRM client 16 to obtain a license (which corresponds to steps S38 and S39 of Fig. 9). The DRM client 16 accesses the DRM server 26 on the basis of the URI of the DRM server 26 and the license ID, which are written in the download control metafile 31, performs authentication processing including sending a notification of the DRM ID or the like, obtains a license, stores the obtained license therein, and sends a notification indicating that the license has been obtained to the downloader 12. The license obtained here corresponds to the license ID written in the download control metafile 31. This license may be an authenticate license or a dummy license.

In contrast, in step S21, the DRM server 26 sends a notification indicating a license request from the DRM client 16 to the customer management server 22. The customer management server 22 regards this notification as the basis for completion of downloading the content and causes the charging/settlement server 23 to perform charging and settlement of an account of the customer (if the pattern of operation is based on a prepaid, fixed fee, no charging or settlement is performed in this step since charging and settlement have already been performed).

The customer management server 22 adds information indicating the downloaded content to the customer information. The added information is reflected in the download navigation page, which is customized for each customer. From this point onward, the customer can check the content that the customer has downloaded on the download navigation page. Alternatively, when downloading of the content is completed, the fact that this completion is recognized by the providing apparatus 20 may be communicated to the downloader 12, thereby informing the user of the receiving apparatus 10 of the fact.

The downloading process has been described in detail as above. As has been described above, with this downloading process, content and its corresponding play control metafile 41 are stored in the storage 13 of the receiving apparatus 10, and a license corresponding to the content stored in the storage 13 is stored in the DRM client 16.

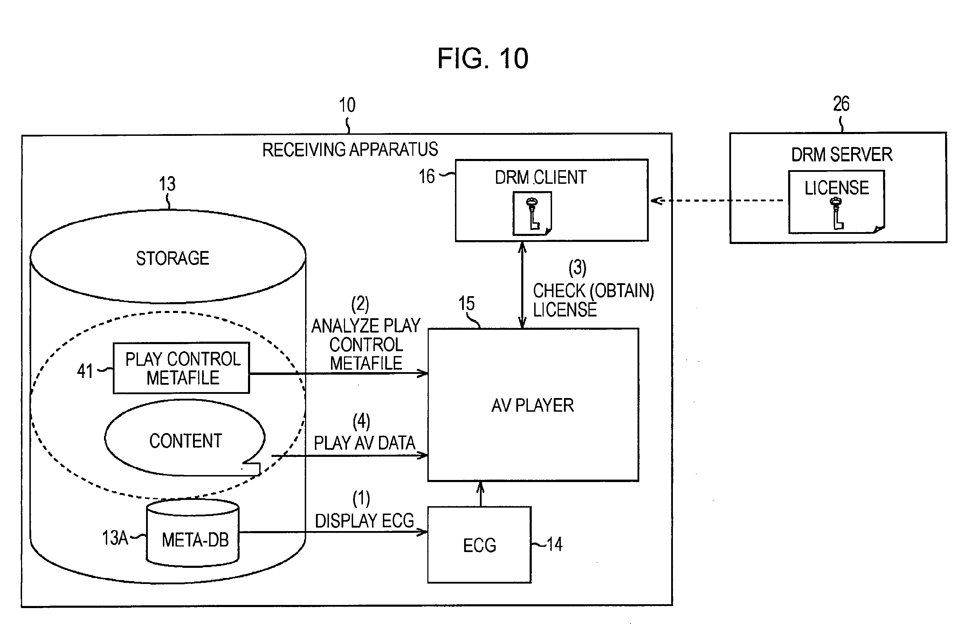

Referring now to Fig. 10, the outline of a process of playing content downloaded to the receiving apparatus 10 will be described.

In response to a predetermined operation entered by the user, the ECG 14 generates a local content list on the basis of the meta-DB 13A stored in the storage 13 and presents the generated local content list to the user. When the user selects content from the presented local content list and gives an instruction to play the content, the ECG 14 activates the AV player 15. Information indicating the content instructed to be played is sent from the ECG 14 to the activated AV player 15.

In response to this information, the AV player 15 reads and analyzes the play control metafile 41 corresponding to the content from the storage 13, extracts a license ID of a license corresponding to the content, and checks whether or not the license corresponding to the license ID is stored in the DRM client 16.

If the license corresponding to the license ID is not stored in the DRM client 16, that is, if the license stored in the DRM client 16 is a dummy license, after charging is acknowledged by the user, the DRM client 16 accesses the DRM server 26 on the basis of the URI of the DRM server 26, which is written in the play control metafile 41, obtains a license (authenticate license) with a license ID written in the play control metafile 41, and provides a content key included in the license to the AV player 15.

Thereafter, the AV player 15 reads the content from the storage 13, decrypts the content, which has been encrypted, using the content key provided from the DRM client 16, and, as a result, obtains encoded data. The AV player 15 decodes the encoded data to obtain AV data, displays corresponding video, and outputs corresponding audio.

Even in the case of an authenticate license, for example, the number of times the content can be played may be restricted. In such a case, the user is informed that the number of times the content can be played is reduced every time the content is played. When the number of times the content can be played becomes zero, after an acknowledgement from the user is obtained, the user is again charged a fee for receiving a new authenticate license.

The outline of the playing process has been described as above.

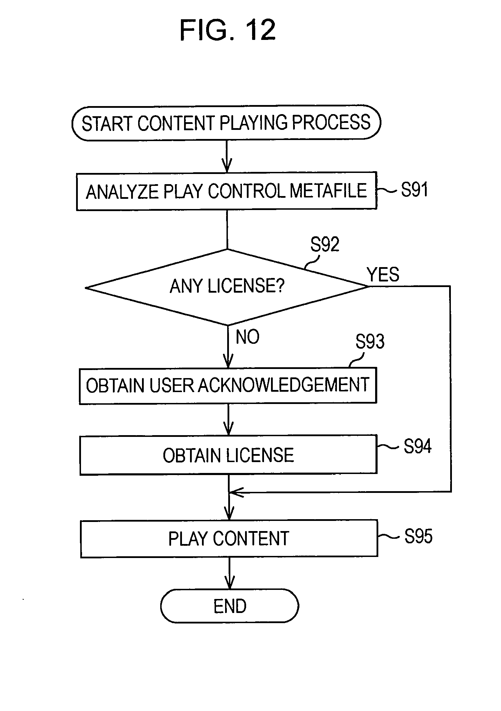

Referring now to the timing chart shown in Fig. 11 and the flowchart shown in Fig. 12, the playing process will be described in more detail. Of the playing process, Fig. 12 particularly illustrates a process performed by the AV player 15.

In response to a predetermined operation entered by the user, in step S81, the ECG 14 reads the meta-DB 13A from the storage 13. In step S82, the ECG 14 generates a GUI local content list on the basis of the read meta-DB 13A and presents the generated local content list to the user.

When the user selects content from the local content list and gives an instruction to play the content, in step S83, the ECG 14 activates the AV player 15 and sends information indicating the content instructed to be played to the activated AV player 15.

In step S84, the AV player 15 reads the play control metafile 41 corresponding to the content from the storage 13. In step S85, the AV player 15 analyzes the play control metafile 41 and extracts a license ID of a license corresponding to the content (which corresponds to step S91 of Fig. 12).

Furthermore, in step S86, the AV player 15 checks whether the license corresponding to the license ID is stored in the DRM client 16 (which corresponds to step S92 of Fig. 12). If the license corresponding to the license ID is not stored in the DRM client 16, that is, if the license stored in the DRM client 16 is a dummy license, the DRM client 16 accesses the DRM server 26 on the basis of the URI of the DRM server 26, which is written in the play control metafile 41, and obtains a license (authenticate license) with a license ID written in the play control metafile 41. The DRM client 16 determines whether a usage condition written in the obtained license is satisfied. If the usage condition included in the obtained license is satisfied, the DRM client 16 provides a content key to the AV player 15 (which corresponds to step S94 of Fig. 12).

Instead of performing charging and settlement at the first time the license is obtained, as in the foregoing downloading process, another pattern of operation is conceivable in which charging and settlement are performed at the time the authenticate license is obtained. In this case, before obtaining the authenticate license, the user is asked to acknowledge charging and settlement by being asked as follows: "Do you want to view the content? If you press the OK button, you will be charged a fee for the content" (which corresponds to step S93 of Fig. 12).

In step S87, the AV player 15, which has obtained the content key, gives an instruction to the storage 13 to read the content. In response to this instruction, in step S88, the AV player 15 plays the content provided from the storage 13 (that is, the AV player 15 decrypts the encrypted content to obtain encoded data, decodes the encoded data to obtain AV data, and displays and outputs corresponding video and audio) (which corresponds to step S95 of Fig. 12).

When playing the content, the AV player 15 is under control of the user. Various operations (trick play operations such as fast-forwarding, rewinding, and cueing) can be performed.

After the playing of the content is completed, in step S89, the AV player 15 deletes the content key therein and performs termination processing to return from being under control of the user to being under control of the ECG 14.

The process of playing the downloaded content has been described as above. According to the playing process described above, whether the authenticate license is obtained in the DRM client 16 is checked when playing the content. If the authenticate license is not obtained, the authenticate license is obtained from the DRM server 26. That is, the license is obtained two times in total since the content has been downloaded.

Patterns of operation of a download service that can be realized using the content download system 1 according to the embodiment of the present invention will be described. A pattern of operation refers to a combination of the structure of a package, which is a unit of a video content product, a charging timing, and a download timing.

The following four types of the structure of a package are assumed: a single unit, a package, all-you-can-download, and selected download.

A single unit is a package including a single piece of content. A package is a package including a finite number of pieces of content that can be purchased at one time and viewed, such as a series of movies. All-you-can-download is a service that enables a viewer to view as many pieces of content, such as movies belonging to the genre of foreign films, as the viewer like. All-you-can-download is a package including an unlimited number of pieces of content belonging to a predetermined group. Pieces of content included in this all-you-can-download package may change from time to time. Selected download is a service that enables a viewer to select, for example, ten movies per month from among pieces of movie content belonging to the genre of Japanese films. Selected download is a package including, among an unlimited number of pieces of content belonging to a predetermined group, a predetermined number of pieces of content within a predetermined period of time. Pieces of content included in this selected download package may change from time to time.

The following three types of charging timings are assumed: pre-download charging, post-download charging, and charging when playing.

In pre-download charging, the amount to be charged is defined before content is downloaded. In post-download charging, the amount to be charged is defined after content is downloaded. In charging when playing, the amount to be charged is defined when content is downloaded and played.

The following three types of download timings are assumed: sequential download, reserved download, and update download.

In sequential download, downloading of content begins immediately in response to an operation entered by a user to give an instruction to select and download the content. In reserved download, downloading of content is reserved by entering an operation, which serves as a trigger, from the user to give an instruction to select and download the content, and downloading of the content begins at a date and time written in the download control metafile 31. In update download, no second operation and so forth is necessary to be entered by a user to give an instruction to select and download content. With a download period written in the download control metafile 31, whether the next content (content that has not been downloaded yet) can be downloaded or not is determined. If the next content can be downloaded, downloading of the next content begins.

As has been described above, there are four types of package structures, three types of charging timings, and three types of download timings. Thus, there are 36 possible patterns of operation. Taking into consideration the realistic operation, the following ten patterns a to j of operation are assumed:
pattern a: single unit, post-download charging, and sequential download
pattern b: single unit, charging when playing, and sequential download
pattern c: single unit, post-download charging, and reserved download
pattern d: package, charging when playing, and update download
pattern e: package, post-download charging, and sequential download
pattern f: package, pre-download charging, and update download
pattern g: all-you-can-download, pre-download charging, and sequential download
pattern h: all-you-can-download, pre-download charging, and update download
pattern i: selected download, pre-download charging, and sequential download
pattern j: selected download, pre-download charging, and update download

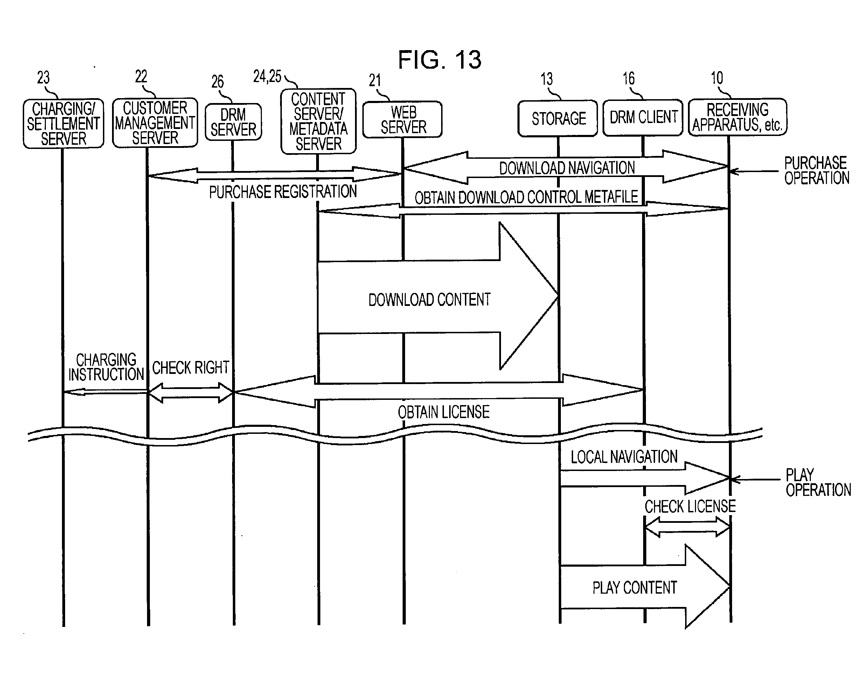

Fig. 13 is a sequence chart illustrating a process corresponding to pattern a of operation. In pattern a, in response to an operation entered by a user to purchase content, the download control metafile 31 is obtained. In accordance with the download control metafile 31, the content is immediately downloaded. After downloading of the content is completed, a license is requested. In response to this request, an authenticate license is provided to the receiving apparatus 10, and a fee is charged to the user. At this stage, the customer management server 22 is informed of the content that has been downloaded to the receiving apparatus 10. From this point onward, downloaded information is reflected in the download navigation page. Accordingly, the user is prevented from giving an instruction to download the same piece of content. To play the downloaded content, the license is only checked in the DRM client 16.

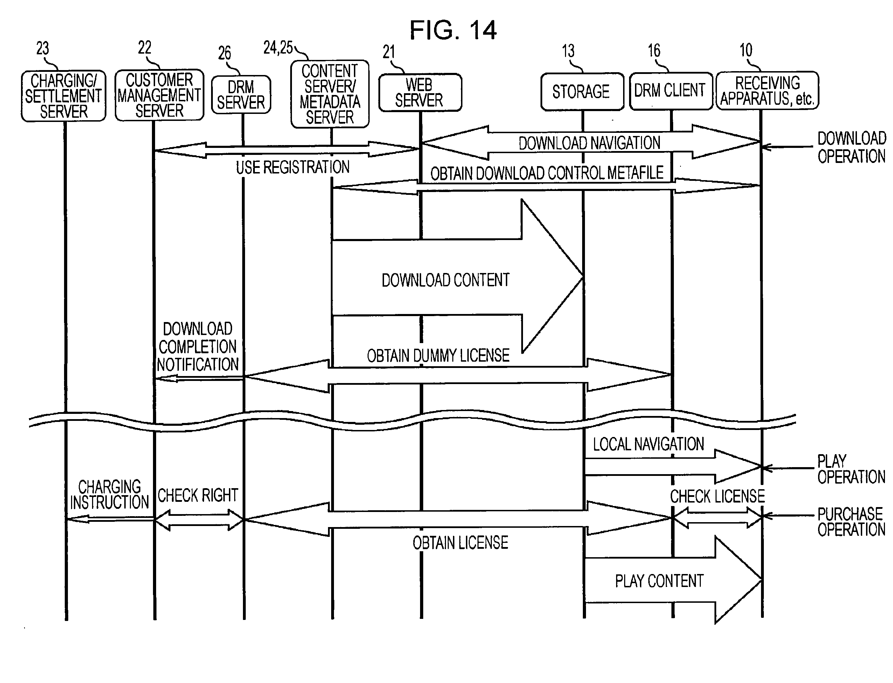

Fig. 14 is a sequence chart illustrating a process corresponding to pattern b of operation. In pattern b, in response to an operation entered by a user to download content, the download control metafile 31 is obtained. In accordance with the download control metafile 31, the content is immediately downloaded. After downloading of the content is completed, a license is requested. In response to this request, a dummy license is provided to the receiving apparatus 10. At this stage, the customer management server 22 is informed of the content that has been downloaded to the receiving apparatus 10. From this point onward, downloaded information is reflected in the download navigation page. To play the downloaded content, since an authenticate license has not been obtained yet, the DRM client 16 requests the authenticate license from the DRM server 26. Before this request, the user is asked to acknowledge charging by being asked as follows: "Do you want to view the content? If you press the OK button; you will be charged a fee for the content". After the user has acknowledged the charging (purchase operation), the authenticate license is requested. In response to this request, the authenticate license is provided to the receiving apparatus 10, and a fee is charged to the user. If the user has not acknowledged the charging, the state returns to displaying a local content list using the ECG 14.

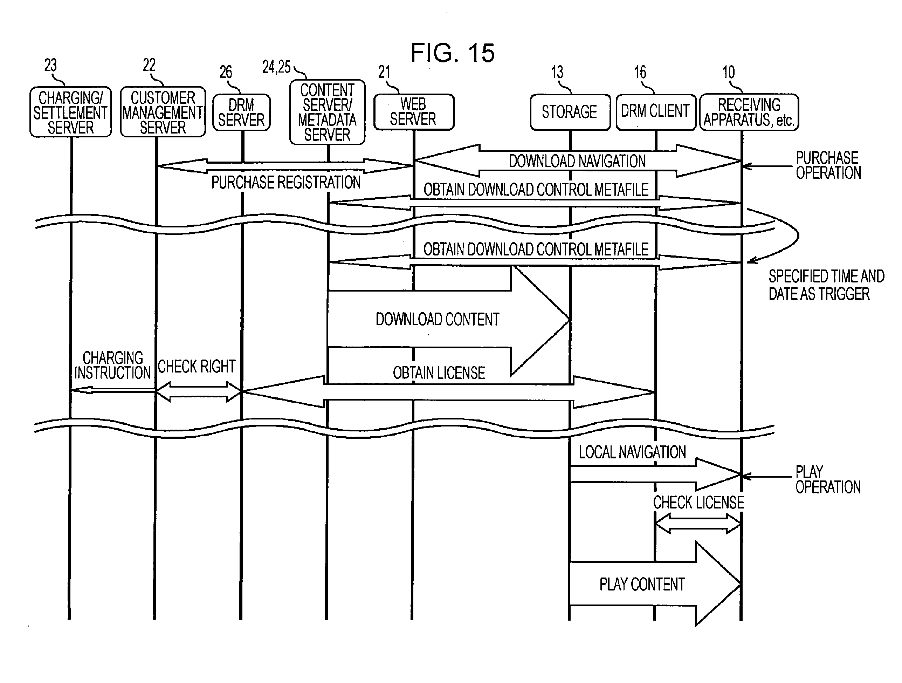

Fig. 15 is a sequence chart illustrating a process corresponding to pattern c of operation. In pattern c, in response to an operation entered by a user to purchase content, the download control metafile 31 is obtained. At a download timing written in the download control metafile 31, the content is downloaded. After downloading of the content is completed, a license is requested. In response to this request, an authenticate license is provided to the receiving apparatus 10, and a fee is charged to the user. At this stage, the customer management server 22 is informed of the content that has been downloaded to the receiving apparatus 10. From this point onward, downloaded information is reflected in the download navigation page. To play the downloaded content, the license is only checked in the DRM client 16.

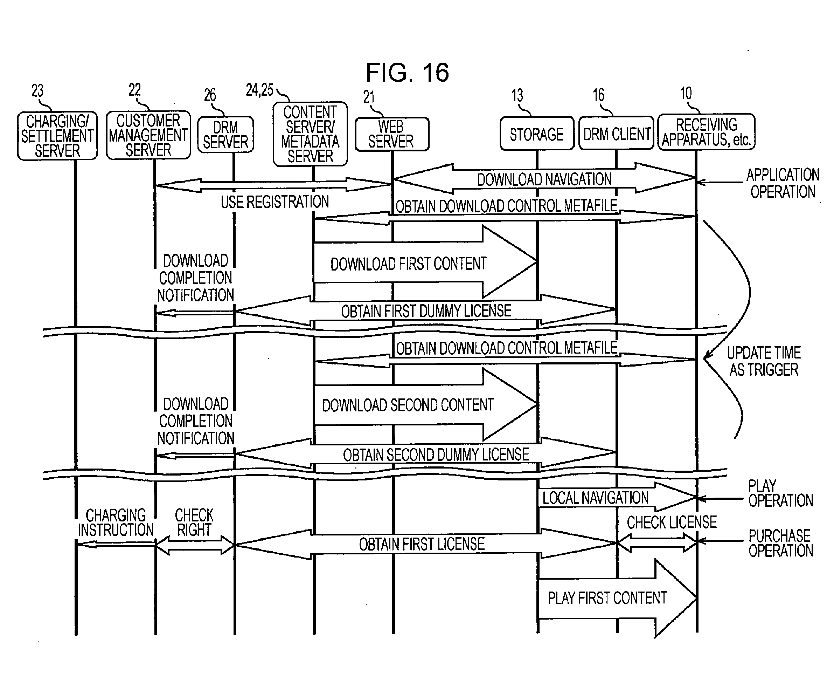

Fig. 16 is a sequence chart illustrating a process corresponding to pattern d of operation. In pattern d, in response to an operation entered by a user to apply for a service, the download control metafile 31 is obtained. In accordance with the download control metafile 31, first content is immediately downloaded. After downloading of the first content is completed, a license is requested. In response to this request, a dummy license is provided to the receiving apparatus 10. At this stage, the customer management server 22 is informed of the content that has been downloaded to the receiving apparatus 10. From this point onward, downloaded information is reflected in the download navigation page.

In accordance with a download (update) timing written in the download control metafile 31, the download control metafile 31 is re-obtained at the specified update timing. If the re-obtained download control metafile 31 has been updated, a series of processes including downloading of content and downloading of a dummy license is repeated. If the user (customer) cancels the service, continuation of downloading can be cancelled by changing the download (update) timing written in the download control metafile 31. To play the downloaded content, since an authenticate license has not been obtained yet, the DRM client 16 requests the authenticate license from the DRM server 26. Before this request, the user is asked to acknowledge charging by being asked as follows: "Do you want to view the content? If you press the OK button, you will be charged a fee for the content". After the user has acknowledged the charging (purchase operation), the authenticate license is requested. In response to this request, the authenticate license is provided to the receiving apparatus 10, and a fee is charged to the user. If the user has not acknowledged the charging, the state returns to displaying a local content list using the ECG 14.

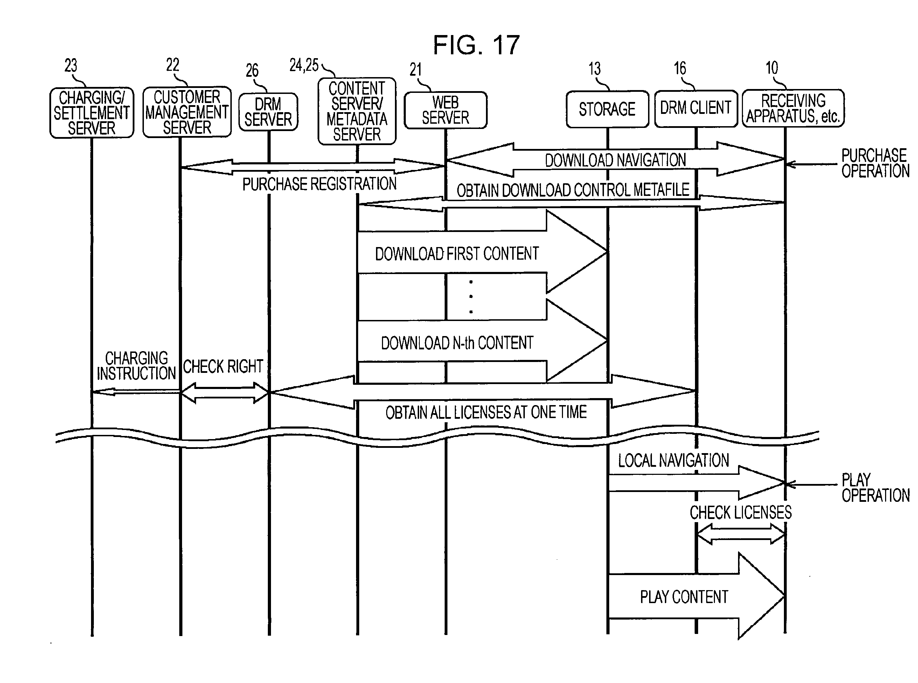

Fig. 17 is a sequence chart illustrating a process corresponding to pattern e of operation. In pattern e, in response to an operation entered by a user to purchase a package, the download control metafile 31 is obtained. In accordance with the download control metafile 31, pieces of content included in the package are immediately downloaded. After downloading of all the pieces of content is completed, licenses are requested. In response to this request, authenticate licenses are provided at one time to the receiving apparatus 10, and a fee is charged to the user. At this stage, the customer management server 22 is informed of the pieces of content that have been downloaded to the receiving apparatus 10. From this point onward, downloaded information is reflected in the download navigation page. To play the downloaded pieces of content, the corresponding licenses are only checked in the DRM client 16.

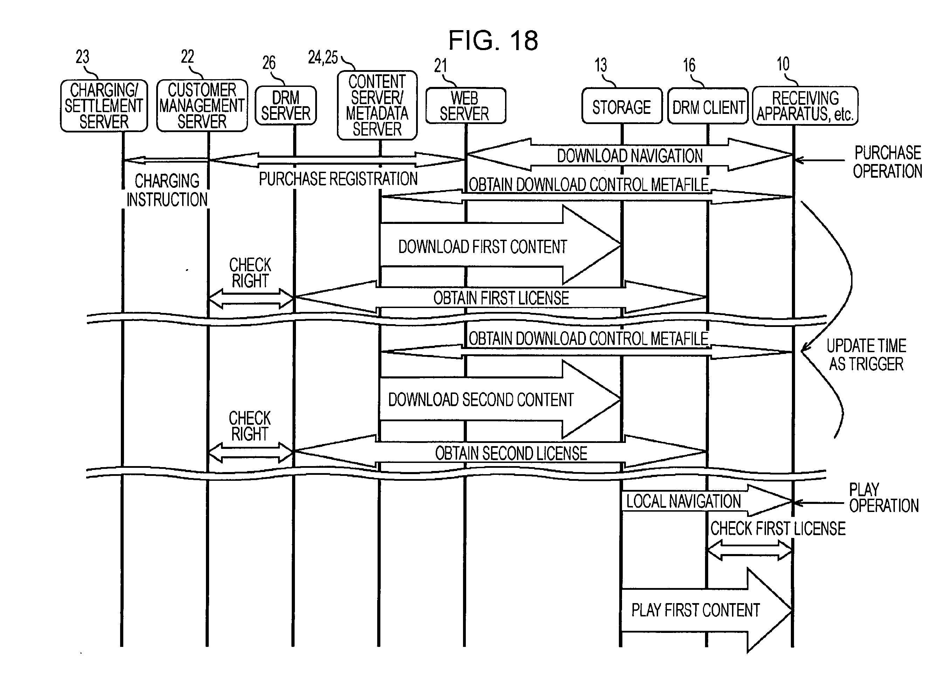

Fig. 18 is a sequence chart illustrating a process corresponding to pattern f of operation. In pattern f, all pieces of content included in a package are periodically downloaded at predetermined intervals (for example, a television drama package having twenty episodes is downloaded over twenty weeks, one episode in one week). In this pattern of operation, post-download charging is difficult to perform since the pieces of content are downloaded at different times. Therefore, pre-download charging is performed.

More specifically, in response to an operation entered by a user to purchase a package, a fee is charged to the user. The download control metafile 31 is obtained. In accordance with the download control metafile 31, first content is immediately downloaded. After downloading of the first content is completed, a license is requested. In response to this request, an authenticate license is provided to the receiving apparatus 10.

In accordance with a download (update) timing written in the download control metafile 31, the download control metafile 31 is re-obtained at the specified update timing. In accordance with the re-obtained download control metafile 31, a series of processes including downloading of second content and downloading of an authenticate license is performed. This series of processes is performed for the number of pieces of content included in the package. To play the downloaded pieces of content, the corresponding licenses are only checked in the DRM client 16.

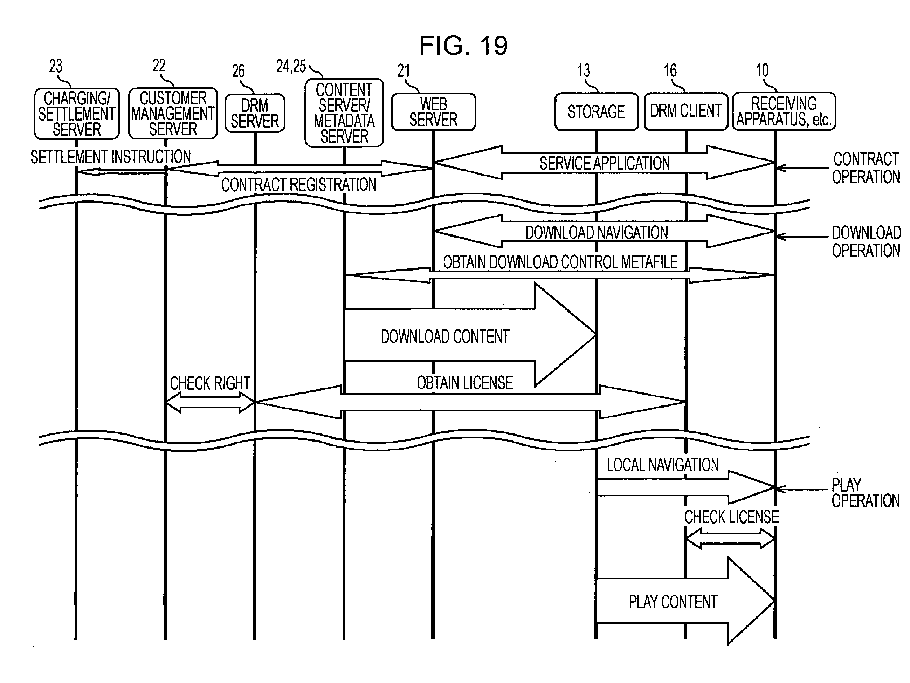

Fig. 19 is a sequence chart illustrating a process corresponding to pattern g of operation. In pattern g, charging and settlement are performed in response to an operation entered by a user to make a contract. In response to an operation entered by the user to download content, the download control metafile 31 is obtained. In accordance with the download control metafile 31, the content is immediately downloaded. After downloading of the content is completed, a license is requested. In response to this request, an authenticate license is provided to the receiving apparatus 10. At this stage, the customer management server 22 is informed of the content that has been downloaded to the receiving apparatus 10. From this point onward, downloaded information is reflected in the download navigation page. To play the downloaded content, the license is only checked in the DRM client 16.

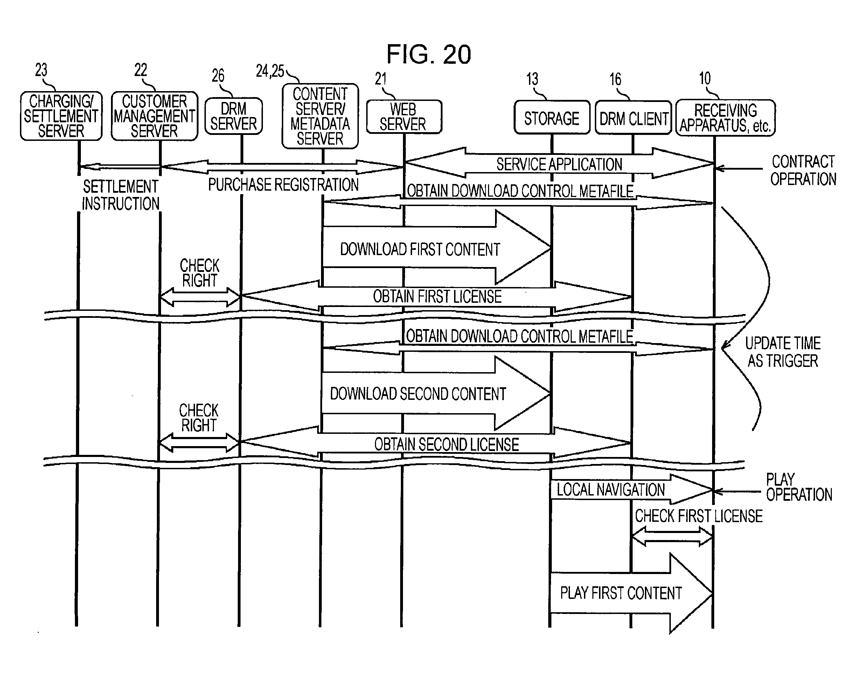

Fig. 20 is a sequence chart illustrating a process corresponding to pattern h of operation. In pattern h, pieces of content are automatically and continuously downloaded.

More specifically, in response to an operation entered by a user to make a contract, a fee is charged to the user. The download control metafile 31 is obtained. In accordance with the download control metafile 31, first content is immediately downloaded. After downloading of the first content is completed, a license is requested. In response to this request, an authenticate license is provided to the receiving apparatus 10.

In accordance with a download (update) timing written in the download control metafile 31, the download control metafile 31 is re-obtained at the specified update timing. In accordance with the re-obtained download control metafile 31, a series of processes including downloading of second content and downloading of an authenticate license is performed. This series of processes is performed until all pieces of content that the user likes to view are downloaded (all-you-can-download) or until the user cancels the contract. To play the downloaded pieces of content, the corresponding licenses are only checked in the DRM client 16.

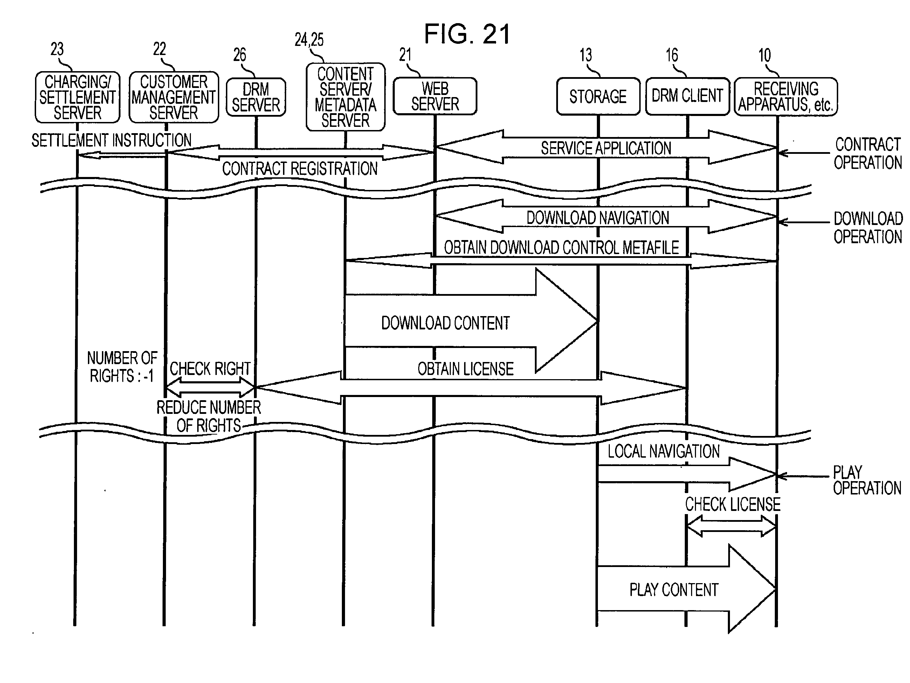

Fig. 21 is a sequence chart illustrating a process corresponding to pattern i of operation. In pattern i, charging and settlement are performed in response to an operation entered by a user to make a contract. In response to an operation entered by the user to download content, the download control metafile 31 is obtained. In accordance with the download control metafile 31, the content is immediately downloaded. After downloading of the content is completed, a license is requested. In response to this request, the number of remaining pieces of content that can be viewed (the number of rights) is checked. If the number of remaining rights is one or more, the number of rights is reduced by one, and an authenticate license is provided to the receiving apparatus 10.

At this stage, the customer management server 22 is informed of the number of rights and the content that has been downloaded to the receiving apparatus 10. From this point onward, downloaded information is reflected in the download navigation page. When the number of rights becomes zero, the user is disabled from giving a download instruction on the download navigation page.

To play the downloaded content, the license is only checked in the DRM client 16.

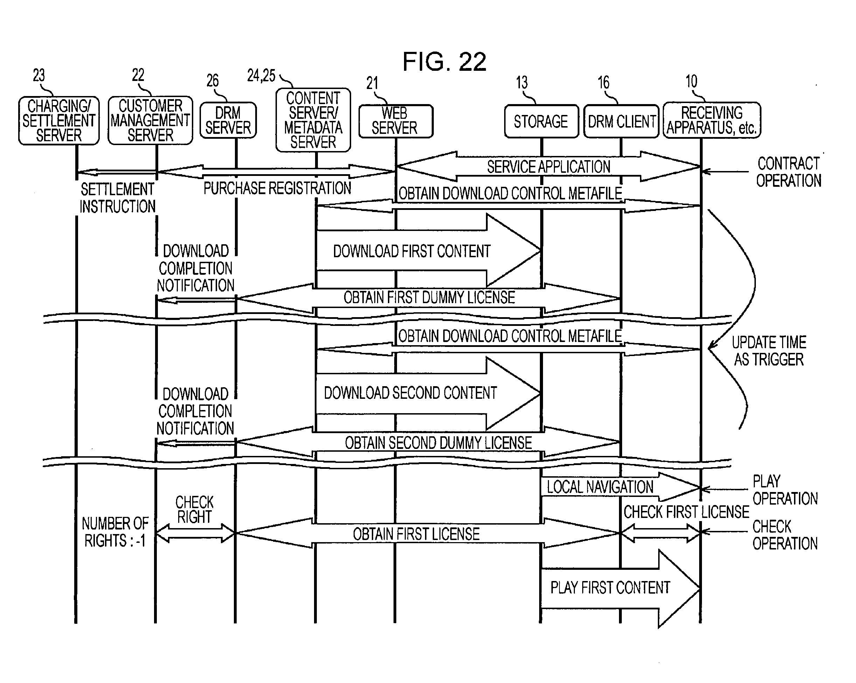

Fig. 22 is a sequence chart illustrating a process corresponding to pattern j of operation. In pattern j, charging and settlement are performed in response to an operation entered by a user to make a contract. The download control metafile 31 is obtained. In accordance with the download control metafile 31, first content is immediately downloaded. After downloading of the first content is completed, a license is requested. In response to this request, a dummy license is provided to the receiving apparatus 10. In accordance with a download (update) timing written in the download control metafile 31, the download control metafile 31 is re-obtained at the specified update timing. If the re-obtained download control metafile 31 has been updated, a series of processes including downloading of content and downloading of a dummy license is repeated. If the user (customer) cancels the service, continuation of downloading can be cancelled by changing the download (update) timing written in the download control metafile 31.

To play the downloaded content, since an authenticate license has not been obtained yet, the DRM client 16 requests the authenticate license from the DRM server 26. Before this request, the user is asked to acknowledge a reduction in the number of rights by being asked as follows: "Do you want to view the content? If you press the OK button, the number of rights is reduced by one". After the user has acknowledged a reduction in the number of rights (check operation), the authenticate license is requested. In response to this request, the authenticate license is provided to the receiving apparatus 10. In response to this request, the number of remaining pieces of content that can be viewed (the number of rights) is checked. If the number of remaining rights is one or more, the number of rights is reduced by one, and the authenticate license is provided to the receiving apparatus 10. If the number of rights is already zero at this point, no authenticate license is provided to the receiving apparatus 10, and the user is informed of the fact that the number of rights is zero. If the user does not acknowledge a reduction in the number of rights, the state returns to displaying a local content list using the ECG 14.

As has been described above, according to the content download system 1 of the embodiment of the present invention, while the basic operation of the receiving apparatus 10 remains common, various patterns of operation as in the foregoing patterns a to j can be handled.

The embodiment of the present invention is not limited to video content. Besides video content, the embodiment of the present invention is applicable to download services of various types of content including music and computer programs.

The series of processes described above can be performed using hardware or software. If software is used to perform the series of processes, a program constituting the software is installed from a program recording medium into a computer in dedicated hardware or, for example, a general-purpose personal computer capable of performing various functions using various programs installed therein.

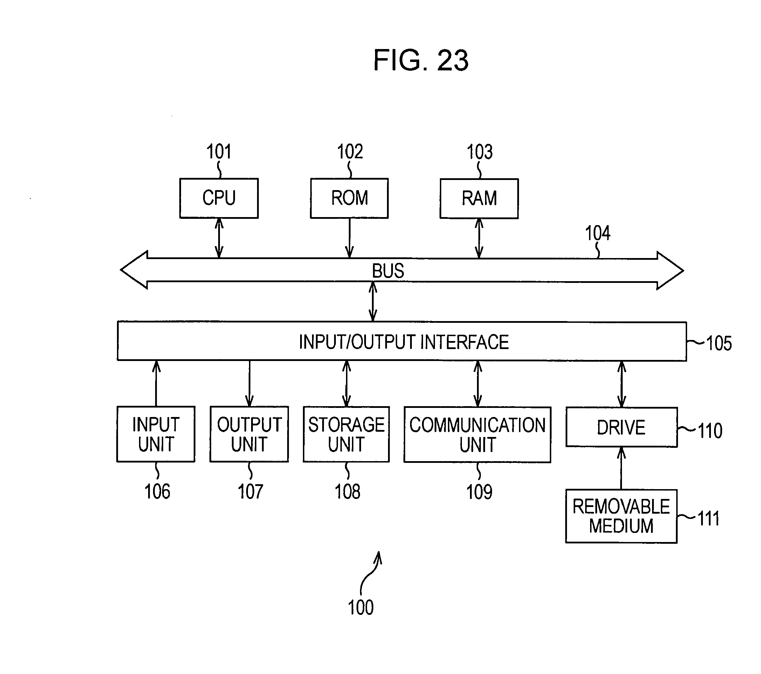

Fig. 23 is a block diagram of an example of the structure of hardware of a computer for executing the series of processes described above using a program.

In a computer 100, a central processing unit (CPU) 101, a read-only memory (ROM) 102, and a random-access memory (RAM) 103 are interconnected by a bus 104.

Furthermore, an input/output interface 105 is connected to the bus 104. The input/output interface 105 is connected to an input unit 106 including a keyboard, a mouse, a microphone, or the like, an output unit 107 including a display, a loudspeaker, or the like, a storage unit 108 including a hard disk, a nonvolatile memory, or the like, a communication unit 109 including a network interface or the like, and a drive 110 for driving a removable medium 111 including a magnetic disk, an optical disk, a magnetooptical disk, a semiconductor memory, or the like.

In the computer 100 with the foregoing structure, the CPU 101 loads a program stored in, for example, the storage unit 108 via the input/output interface 105 and the bus 104 into the RAM 103 and executes the program, thereby performing the above-described series of processes.

The program executed by the computer 100 may be a program that causes the computer 100 to perform the series of processes in accordance with the time sequence following the order described above or a program that causes the computer 100 to perform the series of processes in parallel or at a necessary timing, such as when the program is called.

The program may be processed by a single computer or by a plurality of computers in a dispersed manner. Furthermore, the program may be transferred to and executed by a remote computer.

In the present specification, the term "system" refers to a set of a plurality of apparatuses.

It should be understood by those skilled in the art that various modifications, combinations, sub-combinations, and alterations may occur depending on design requirements and other factors insofar as they are within the scope of the appended claims or the equivalents thereof.

## Claims

1. A content download system comprising:
a content providing apparatus configured to provide content; and
a content receiving apparatus configured to receive the content provided from the content providing apparatus via a network,
wherein the content receiving apparatus includes
operation input means for receiving an input of an operation entered by a user,
download means for obtaining, in response to the operation entered by the user, download control data necessary for downloading content from the content providing apparatus and, on the basis of the download control data, downloading encrypted content and play control data necessary for playing the encrypted content from the content providing apparatus,
obtaining means for obtaining, in a case where the encrypted content is downloaded, on the basis of the download control data, a license including a key for decrypting the encrypted content from the content providing apparatus and, in order to play the downloaded and encrypted content, checking the obtained license on the basis of the play control data and re-obtaining the license according to a checking result, and
play means for decrypting the encrypted content using the obtained license and playing the decrypted content, and
wherein the content providing apparatus includes
control-data providing means for providing the download control data, which is necessary for the content receiving apparatus to download content, and the play control data, which is necessary for the content receiving apparatus to play the downloaded content, to the content receiving apparatus,
content providing means for providing, to the content receiving apparatus, the encrypted content in response to a request from the content receiving apparatus on the basis of the download control data, and
license providing means for providing, to the content receiving apparatus, the license including the key for decrypting the encrypted content in response to a request from the content receiving apparatus on the basis of the download control data and for providing, to the content receiving apparatus, the license in response to a request from the content receiving apparatus on the basis of the play control data.

2. A content download method for a content download system including a content providing apparatus configured to provide content and a content receiving apparatus configured to receive the content provided from the content providing apparatus via a network, the method comprising the steps of:
receiving, using the content receiving apparatus, an input of an operation entered by a user;
obtaining, using the content receiving apparatus, in response to the operation entered by the user, download control data necessary for downloading content from the content providing apparatus;
requesting, using the content receiving apparatus, on the basis of the download control data, encrypted content and play control data necessary for playing the encrypted content from the content providing apparatus;
providing, using the content providing apparatus, the encrypted content and the play control data in response to the request from the content receiving apparatus on the basis of the download control data;
requesting, using the content receiving apparatus, in a case where the encrypted content is downloaded, a license including a key for decrypting the encrypted content from the content providing apparatus on the basis of the download control data;
providing, using the content providing apparatus, the license to the content receiving apparatus in response to the request from the content receiving apparatus on the basis of the download control data;
checking, using the content receiving apparatus, in order to play the downloaded and encrypted content, the obtained license on the basis of the play control data and re-requesting the license according to a checking result; and
providing, using the content providing apparatus, the license to the content receiving apparatus in response to the request from the content receiving apparatus on the basis of the play control data.

3. A content providing apparatus configured to provide content to a content receiving apparatus connected to the content providing apparatus via a network, the content providing apparatus comprising:
control-data providing means for providing, to the content receiving apparatus, download control data necessary for the content receiving apparatus to download content and play control data necessary for the content receiving apparatus to play the downloaded content;
content providing means for providing, to the content receiving apparatus, encrypted content in response to a request from the content receiving apparatus on the basis of the download control data; and
license providing means for providing, to the content receiving apparatus, a license including a key for decrypting the encrypted content in response to a request from the content receiving apparatus on the basis of the download control data and for providing, to the content receiving apparatus, the license in response to a request from the content receiving apparatus on the basis of the play control data.

4. The content providing apparatus according to claim 3, further comprising charging means for charging, in response to the request for the license made by the content receiving apparatus on the basis of the download control data, a fee to a user of the content receiving apparatus or for reducing the number of purchased rights.

5. The content providing apparatus according to claim 3 or 4, further comprising customer management means for recognizing, in response to the request for the license made by the content receiving apparatus on the basis of the download control data, that the content corresponding to the license has been downloaded by the content receiving apparatus and storing the downloaded content in correspondence with a user of the content receiving apparatus.

6. The content providing apparatus according to any one of claims 3 to 5, wherein the license providing means provides a dummy license in response to the request from the content receiving apparatus on the basis of the download control data and an authenticate license in response to the request from the content receiving apparatus on the basis of the play control data.

7. A content providing method for a content providing apparatus configured to provide content to a content receiving apparatus connected to the content providing apparatus via a network, the method comprising the steps of:
providing download control data necessary for the content receiving apparatus to download content to the content receiving apparatus;
providing, in response to a request from the content receiving apparatus on the basis of the download control data, play control data necessary for the content receiving apparatus to play the downloaded content to the content receiving apparatus;
providing, to the content receiving apparatus, encrypted content in response to a request from the content receiving apparatus on the basis of the download control data;
providing, to the content receiving apparatus, a license including a key for decrypting the encrypted content in response to a request from the content receiving apparatus on the basis of the download control data; and
providing, to the content receiving apparatus, the license in response to a request from the content receiving apparatus on the basis of the play control data.

8. A program capable of execution by a content providing apparatus configured to provide content to a content receiving apparatus connected to the content providing apparatus via a network, the program, on execution, causing the content providing apparatus to perform a method according to claim 7.

9. A content receiving apparatus configured to receive content provided from a content providing apparatus connected to the content receiving apparatus via a network, the content receiving apparatus comprising:
operation input means for receiving an input of an operation entered by a user;
download means for obtaining, in response to the operation entered by the user, download control data necessary for downloading content from the content providing apparatus and, on the basis of the download control data, downloading encrypted content and play control data necessary for playing the encrypted content from the content providing apparatus;
obtaining means for obtaining, in a case where the encrypted content is downloaded, on the basis of the download control data, a license including a key for decrypting the encrypted content from the content providing apparatus and, in order to play the downloaded and encrypted content, checking the obtained license on the basis of the play control data and re-obtaining the license according to a checking result; and
play means for decrypting the encrypted content using the obtained license and playing the decrypted content.

10. The content receiving apparatus according to claim 9, wherein, in a case where the encrypted content is downloaded, on the basis of the download control data, the obtaining means obtains a dummy license from the content providing apparatus and, in order to play the downloaded and encrypted content, the obtaining means obtains an authenticate license on the basis of the play control data.

11. The content receiving apparatus according to claim 9 or 10, wherein the obtaining means obtains the license on the basis of the play control data only in a case where the obtaining of the license is acknowledged by the user.

12. The content receiving apparatus according to any one of claims 9 to 11, wherein, in a case where the encrypted content is downloaded, on the basis of the download control data, the obtaining means obtains an authenticate license from the content providing apparatus and, in order to play the
downloaded and encrypted content, the obtaining means checks the obtained authenticate license on the basis of the play control data.

13. The content receiving apparatus according to any one of claims 9 to 12, wherein, in a case where the encrypted content is downloaded, the obtaining means obtains the license from the content providing apparatus only when information for obtaining the license is included in the download control data.

14. A content receiving method for a content receiving apparatus configured to receive content provided from a content providing apparatus connected to the content receiving apparatus via a network, the method comprising the steps of:
receiving an input of an operation entered by a user;
obtaining, in response to the operation entered by the user, download control data necessary for downloading content from the content providing apparatus;
downloading, on the basis of the download control data, encrypted content and play control data necessary for playing the encrypted content from the content providing apparatus;
obtaining, in a case where the encrypted content is downloaded, on the basis of the download control data, a license including a key for decrypting the encrypted content from the content providing apparatus;
checking, in order to play the downloaded and encrypted content, the obtained license on the basis of the play control data and re-obtaining the license according to a checking result; and
decrypting the encrypted content using the obtained license and playing the decrypted content.

15. A program capable of execution by a content receiving apparatus configured to receive content provided from a content providing apparatus connected to the content receiving apparatus via a network, the program, on execution, causing the content receiving apparatus to perform a method according to claim 14.
